# EUROPÄISCHE PATENTSCHRIFT

(11) **EP 3 533 188 B1**
(45) Veröffentlichungstag und Bekanntmachung des Hinweises auf die Patenterteilung: **08.07.2020**
(21) Anmeldenummer: 16823014.2
(22) Anmeldetag: 29.12.2016
(51) Int. Cl.: H04L 12/751, G05B 19/418, H04L 12/24, H04L 12/721, H04L 12/911, G05B 19/042, H04L 12/873

(54) **VERFAHREN ZUM BETRIEB EINES MEHRERE KOMMUNIKATIONSGERÄTE UMFASSENDEN KOMMUNIKATIONSNETZES EINES INDUSTRIELLEN AUTOMATISIERUNGSSYSTEMS UND STEUERUNGSEINHEIT**
METHOD FOR OPERATING AN INDUSTRIAL AUTOMATION SYSTEM COMMUNICATION NETWORK COMPRISING A PLURALITY OF COMMUNICATION DEVICES, AND CONTROL UNIT
PROCÉDÉ DE FONCTIONNEMENT D'UN RÉSEAU DE COMMUNICATION D'UN SYSTÈME D'AUTOMATISATION INDUSTRIELLE COMPRENANT UNE PLURALITÉ D'APPAREILS DE COMMUNICATION ET UNITÉ DE COMMANDE

(43) Veröffentlichungstag der Anmeldung: 04.09.2019
(73) Patentinhaber: Siemens Aktiengesellschaft, 80333 München (DE)
(72) Erfinder: DILGER, Marco, 77830 Bühlertal (DE); HOUYOU, Amine Mohamed, Jersey City, NJ 07306 (US); RIEDL, Johannes, 84030 Ergolding (DE); ZIRKLER, Andreas, 81735 München (DE)
(86) Internationale Anmeldenummer: PCT/EP2016/082831
(87) Internationale Veröffentlichungsnummer: WO 2018/121864

(56) Entgegenhaltungen:
- DE-A1-102014 219 472
- US-A1- 2014 372 617
- SCHWEISSGUTH EIKE ET AL: "Application-aware industrial ethernet based on an SDN-supported TDMA approach", 2016 IEEE WORLD CONFERENCE ON FACTORY COMMUNICATION SYSTEMS (WFCS), IEEE, 3. Mai 2016 (2016-05-03), Seiten 1-8, XP032915554, DOI: 10.1109/WFCS.2016.7496496 [gefunden am 2016-06-20]
- YIN-FU HUANG ET AL: "Radio resource management for a mobile network with TD-CDMA", EMERGING TECHNOLOGIES: FRONTIERS OF MOBILE AND WIRELESS COMMUNICATION, 2004. PROCEEDINGS OF THE IEEE 6TH CIRCUITS AND SYSTEMS SYMPOSIUM, PISCATAWAY, NJ, USA, IEEE, Bd. 1, 31. Mai 2004 (2004-05-31), Seiten 73-76, XP010716016, DOI: 10.1109/CASSET.2004.1322920 ISBN: 978-0-7803-7938-1

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Software Defined Networking zielt auf eine Virtualisierung von Kommunikationsnetzfunktionen ab, indem Kommunikationsgeräte wie Router oder Switche funktionell in Control Plane und Data Plane zugeordnete Komponenten unterteilt werden. Die Data Plane umfasst Funktionen bzw. Komponenten zur Weiterleitung von Datenpaketen bzw. -rahmen. Die Control Plane umfasst hingegen Management-Funktionen zur Steuerung der Weiterleitung bzw. der Komponenten der Data Plane. Mit OpenFlow ist beispielsweise ein Standard für Software-implementierte Control Planes definiert. Eine Abstraktion von Hardware als virtuelle Services ermöglicht einen Verzicht auf eine manuelle Konfiguration der Hardware, insbesondere indem eine programmierbare, zentrale Steuerung von Netzverkehr geschaffen wird. OpenFlow unterstützt eine Partitionierung von System-Ressourcen in Network Slices, durch die unabhängig von anderen bestehenden Network Slices eine Bereitstellung definierter System-Ressourcen gewährleistet wird.

Aus US 2013/268686 A1 ist ein Verfahren zum Senden einer Anforderung eines Verbindungsaufbaus bekannt, bei dem ein OpenFlow-Switch eine Nachricht mit einer Parameteranforderung an einen Konfigurationsserver sendet, um Verbindungsparameter von einem OpenFlow-Controller zu erhalten. Auf die Nachricht mit der Parameteranforderung empfängt der OpenFlow-Switch eine IP-Adresse und einen Satz von OpenFlow-Verbindungsparametern vom Konfigurationsserver, wobei der Satz von OpenFlow-Verbindungsparametern zumindest Verbindungsparameter eines ersten OpenFlow-Controllers umfasst. Der OpenFlow-Switch sendet entsprechend der IP-Adresse und dem Satz von OpenFlow-Verbindungsparametern des ersten OpenFlow-Controllers eine Nachricht mit einer Anforderung eines Verbindungsaufbaus an den ersten OpenFlow-Controller. Auf diese Weise kann ein automatischer Verbindungsaufbau zwischen einem OpenFlow-Switch und einem OpenFlow-Controller realisiert werden.

WO 2013/110742 A1 betrifft eine Steuerungseinheit zur Bereitstellung von Kommunikationsdiensten innerhalb eines physikalischen Kommunikationsnetzes. Diese Kommunikationsdienste werden durch mehrere auf Kommunikationsgeräten ablaufende Anwendungen genutzt, für die jeweils Anforderungen an die Kommunikationsdienste spezifiziert sind. Durch die Steuerungseinheit wird ein Kommunikationsnetzmodell erzeugt, das eine Topologie des physikalischen Kommunikationsnetzes wiedergibt und für jedes Kommunikationsgerät ein Netzknotenmodell umfasst. Das Netzknotenmodell beschreibt Funktionen und Ressourcen des jeweiligen Kommunikationsgeräts. Außerdem berechnet die Steuerungseinheit für jede auf den Kommunikationsgeräten ablaufende Anwendung ein virtuelles Kommunikationsnetz, indem die Anforderungen der jeweiligen Anwendung an die Kommunikationsdienste auf das Kommunikationsnetzmodell abgebildet werden. Die berechneten virtuellen Kommunikationsnetze umfassen jeweils zumindest 2 durch ein Netzknotenmodell beschriebene Netzknoten und eine Partition bzw. Network Slice ausgewählter Kommunikationsnetzressourcen, die durch die Kommunikationsgeräte bereitgestellt werden.

In WO 2014/108178 A1 ist ein Verfahren zur Verbindung eines bootenden Switchs mit einem Kommunikationsnetz mittels einer zentralen Steuerungseinheit beschrieben, wobei das Kommunikationsnetz eine Vielzahl von Switchen umfasst, die durch die zentrale Steuerungseinheit gesteuert werden. Zur Steuerung der Switche übermittelt die zentrale Steuerungseinheit Datenpakete mit Steuerungsinformationen für die Switche über dieselben Kommunikationspfade wie Datenpakete mit Nutzdaten. Die Switche umfassen jeweils eine Pipeline, in der Weiterleitungsregeln für Datenpakete gespeichert sind und auf die über einen lokalen Switch-Port zugegriffen werden kann. Die Kommunikationspfade für die Datenpakete mit Steuerungsinformationen werden eingerichtet, indem durch die zentrale Steuerungseinheit vorgegebene Weiterleitungsregeln in den Pipelines der Switche gespeichert werden. Zumindest einer der Switche weist einen ausgewählten Port auf, über den der bootende Switch mit dem Kommunikationsnetz verbunden ist. Zur Speicherung von Weiterleitungsregeln im bootenden Switch durch die zentrale Steuerungseinheit wird ein temporärer Kommunikationspfad genutzt, der einen Kommunikationspfad zwischen dem ausgewählten Port und der zentralen Steuerungseinheit sowie einen Kommunikationspfad zwischen dem ausgewählten Port und einem lokalen Port des bootenden Switchs umfasst. Dieser temporäre Kommunikationspfad ermöglicht einen Zugriff auf die Pipeline des bootenden Switchs.

WO 2015/096761 A1 beschreibt eine datenverkehrsorientierte dynamische Zonenbildung für Software Defined Networking (SDN), bei der eine Netzkomponente Steuerungsinformationen von einem SDN-Controller aus einer Mehrzahl von SDN-Controllern empfängt. Die Netzkomponente ermittelt verfügbare Verkehrsplanungszonen und wählt für jede ermittelte Verkehrsplanungszone einen lokalen Zonen-Controller aus. Anhand der Steuerungsinformationen und eines Zonenbildungsschemas wird ein Master-Zonen-Controller ausgewählt, wobei der Master-Zonen-Controller und die lokalen Zonen-Controller aus den SDN-Controllern ausgewählt werden. Darüber hinaus übermittelt die Netzkomponente Angaben zu lokalen Zonen-Controllern, Zonen-Mitgliedschaft und Master-Zonen-Controller an zumindest einige der SDN-Controller.

Der Artikel "Application-Aware Industrial Ethernet Based on an SDN-Supported TDMA Approach" von Eike Schweissguth et. al., publiziert am 3.5.2016 auf der IEEE WORLD CONFERENCE ON FACTORY COMMUNICATION SYSTEMS, zeigt, wie in einem zentral gesteuerten TDMA-basierten Netzwerk Daten verschiedener Warteschlangen in einem definierten, periodischen Rhythmus kollisionsfrei Zugriff auf die zentral verwalteten Netzwerkpfade bekommen.

Für zyklusorientierte Steuerungsprozesse in industriellen Automatisierungssystemen, bei denen Steuerungsbefehle regelmäßig innerhalb einer vorgegebenen Zykluszeit übermittelt sein müssen, wird die Zykluszeit als Zeitbasis für eine periodische Datenübermittlung verwendet. Aufgrund einer üblicherweise eher geringen Datenmenge bei Steuerungsbefehlen bestehen Herausforderungen in industriellen Automatisierungssystem weniger in einer Bereitstellung einer ausreichenden Bandbreite zur Übermittlung der Steuerungsbefehle, sondern vielmehr in einer zuverlässigen Gewährleistung eines definierten Zeitfensters für ihre Übermittlung. Hierzu werden beispielsweise Zeitscheiben-basierte Scheduler verwendet, mit denen hohe Anforderungen an Latenz und Jitter erfüllt werden können. Allerdings ist eine konsistente Konfigurierung von Zeitscheiben-basierten Schedulern insbesondere in industriellen Automatisierungssystemen sehr aufwendig, zumal bestehende Lösungen für eine Virtualisierung von Kommunikationsnetzen lediglich auf Bandbreiten-Garantien abzielen.

Der vorliegenden Erfindung liegt die Aufgabe zugrunde, ein einfaches und fehlersicheres Verfahren zur Konfiguration einer zeitbasierten Zugriffssteuerung für Sendewarteschlangen in industriellen Kommunikationsgeräten bei Pfadreservierungsanfragen anzugeben sowie eine entsprechende Steuerungseinheit für Kommunikationsgeräte anzugeben.

Diese Aufgabe wird erfindungsgemäß durch ein Verfahren mit den in Anspruch 1 genannten Merkmalen und durch eine Steuerungseinheit mit den in Anspruch 12 angegebenen Merkmalen gelöst. Vorteilhafte Weiterbildungen der vorliegenden Erfindung sind in den abhängigen Patentansprüchen angegeben. Entsprechend dem erfindungsgemäßen Verfahren zum Betrieb eines mehrere Kommunikationsgeräte umfassenden Kommunikationsnetzes eines industriellen Automatisierungssystems steuert zumindest eine Steuerungseinheit Funktionen mehrerer zugeordneter Kommunikationsgeräte. Dabei ist die Steuerungseinheit zumindest einer Partition des Kommunikationsnetzes zugeordnet. Partitionen umfassen jeweils vorgebbare Anteile an Systemressourcen zugeordneter Kommunikationsgeräte für vorgebbare Ressourcennutzungsdauern und sind vorzugsweise zueinander logisch disjunkt. Darüber hinaus umfassen die Kommunikationsgeräte jeweils zumindest eine Sende- und Empfangseinheit, wobei jeder Sende- und Empfangseinheit jeweils mehrere Sendewarteschlangen zugeordnet sind, denen jeweils für eine definierbare Zugriffszeitdauer innerhalb eines definierbaren Wiederholungszyklus Zugriff auf die jeweilige Sende- und Empfangseinheit eingeräumt wird.

Die Kommunikationsgeräte können beispielsweise einem Software Defined Network zugeordnet sein, das eine als Control Plane bezeichnete Kommunikationssteuerungsebene und eine als Data Plane bezeichnete Datenübermittlungsebene umfasst. Dabei ist die Steuerungseinheit der Control Plane zugeordnet, während die Kommunikationsgeräte der Data Plane zugeordnet sind. Insbesondere können die Kommunikationsgeräte Router bzw. Switches umfassen, wobei durch die Steuerungseinheit beispielsweise Flow-Tabellen vorgebbar sind, aus denen Routing-Tabellen bzw. Forwarding-Tabellen für der Steuerungseinheit zugeordnete Kommunikationsgeräte abgeleitet werden. Vorzugsweise sind die Partitionen Network Slices und werden mittels eines Engineering-Systems manuell durch einen Systemadministrator oder automatisiert festgelegt.

Erfindungsgemäß werden die Zugriffszeitdauern und Wiederholungszyklen für die Sendewarteschlangen durch die Steuerungseinheit entsprechend den Ressourcennutzungsdauern für die Partitionen in den zugeordneten Kommunikationsgeräten eingestellt. Außerdem werden die Partitionen entsprechend den in den zugeordneten Kommunikationsgeräten eingestellten Zugriffszeitdauern und Wiederholungszyklen klassifiziert. Dementsprechend werden Pfadreservierungsanfragen für Datenströme entsprechend spezifizierten Zugriffszeitdauern und Wiederholungszyklen klassifiziert. Für die Pfadreservierungsanfragen werden anhand übereinstimmender Klassifizierungen von Zugriffszeitdauern und Wiederholungszyklen mögliche Partitionen ermittelt. Die ermittelten Partitionen werden darauf überprüft, ob für die jeweilige Pfadreservierungsanfrage ausreichende Systemressourcen verfügbar sind. Bei einem positiven Überprüfungsergebnis wird die jeweilige Pfadreservierungsanfrage zumindest einer ermittelten Partition zugeordnet, und innerhalb dieser Partition werden für die Pfadreservierungsanfrage erforderliche Systemressourcen reserviert. Auf diese Weise ist eine einfache und zuverlässige Konfiguration von Kommunikationsnetz-Partitionen möglich, die flexibel an Zykluszeiten in einem industriellen Automatisierungssystem anpassbar ist. Dabei kann eine gegenseitige Beeinflussung der Partitionen ausgeschlossen werden.

Entsprechend einer vorteilhaften Ausgestaltung des erfindungsgemäßen Verfahrens ermittelt die Steuerungseinheit für die Pfadreservierungsanfragen jeweils Kommunikationsnetzpfade unter Berücksichtigung in der jeweiligen Partition verfügbarer Systemressourcen und steuert Routing- oder Switching-Funktionen der Kommunikationsgeräte entsprechend den ermittelten Kommunikationsnetzpfaden. Die Steuerungseinheit ermittelt die Kommunikationsnetzpfade vorzugsweise anhand eines Gütemaßes. Als Gütemaß zur Ermittlung der Kommunikationsnetzpfade durch die Steuerungseinheit können beispielsweise Pfadkosten angesetzt werden.

Die Sendewarteschlangen der Kommunikationsgeräte können durch die Steuerungseinheit für Datenströme mit unterschiedlichen Wiederholungszyklen eingestellt werden, indem für die unterschiedlichen Wiederholungszyklen ein kleinstes gemeinsames Vielfaches als Gesamt-Wiederholungszyklus ermittelt wird. Dabei sind die unterschiedlichen Wiederholungszyklen für die Sendewarteschlangen mit einer Häufigkeit in den Gesamt-Wiederholungszyklus eingebettet, die einem Quotienten aus Gesamt-Wiederholungszyklus und jeweiligem Wiederholungszyklus entspricht. Vorzugsweise sind die Zugriffszeitdauern für die Sendewarteschlangen jeweils identisch, während die unterschiedlichen Wiederholungszyklen jeweils ein ganzzahliges Vielfaches eines Grundzyklus sind.

Grundsätzlich können die Systemressourcen mehreren Steuerungseinheiten bei einer Inbetriebnahme des Kommunikationsnetzes gleichverteilt partitioniert zugeordnet werden. Die Partitionen werden dann entsprechend einer jeweiligen Ressourcenausnutzung bzw. -anforderung durch die Steuerungseinheiten verändert. Vorzugsweise werden die Systemressourcen bei einer Inbetriebnahme des Kommunikationsnetzes entsprechend bekannter bzw. geschätzter Klassifikationen von Kommunikationsanforderungen seitens mit dem Kommunikationsnetz zu verbindender Automatisierungsgeräte partitioniert. Auf diese Weise sind bei Pfadreservierungsanfragen übereinstimmende Klassifizierungen von Zugriffszeitdauern und Wiederholungszyklen zu erwarten. Somit können Pfadreservierungsanfragen angenommen werden, ohne dass Partitionen verändert werden müssen.

Steuerungseinheiten können beispielsweise jeweils zumindest einem Tenant, einem Benutzer bzw. einer Anwendung zugeordnet sein. Darüber hinaus werden die Pfadreservierungsanfragen durch jeweils einen Tenant, einen Benutzer und/oder eine Anwendung initiiert und die Zugriffszeitdauern und Wiederholungszyklen für die Sendewarteschlangen der Kommunikationsgeräte werden mittels Time Aware Shaper entsprechend IEE 802.1Qbv gesteuert.

Die erfindungsgemäße Steuerungseinheit ist zur Durchführung eines Verfahrens entsprechend vorangehenden Ausführungen vorgesehen und dafür ausgestaltet und eingerichtet, Funktionen mehrerer zugeordneter Kommunikationsgeräte zu steuern und zumindest einer Partition eines Kommunikationsnetzes zugeordnet zu sein. Dabei umfassen Partitionen jeweils vorgebbare Anteile an Systemressourcen zugeordneter Kommunikationsgeräte für vorgebbare Ressourcennutzungsdauern. Außerdem ist die Steuerungseinheit dafür ausgestaltet und eingerichtet, Zugriffszeitdauern und Wiederholungszyklen für Sendewarteschlangen entsprechend den Ressourcennutzungsdauern für die Partitionen in den zugeordneten Kommunikationsgeräten einzustellen. Dabei umfassen die Kommunikationsgeräte jeweils zumindest eine Sende- und Empfangseinheit. Jeder Sende- und Empfangseinheit sind jeweils mehrere Sendewarteschlangen zugeordnet, denen jeweils für eine definierbare Zugriffszeitdauer innerhalb eines definierbaren Wiederholungszyklus Zugriff auf die jeweilige Sende- und Empfangseinheit eingeräumt wird.

Erfindungsgemäß ist die Steuerungseinheit dafür ausgestaltet und eingerichtet, die Partitionen entsprechend den in den zugeordneten Kommunikationsgeräten eingestellten Zugriffszeitdauern und Wiederholungszyklen zu klassifizieren und Pfadreservierungsanfragen für Datenströme entsprechend spezifizierten Zugriffszeitdauern und Wiederholungszyklen zu klassifizieren. Außerdem ist die Steuerungseinheit dafür ausgestaltet und eingerichtet, für die Pfadreservierungsanfragen anhand übereinstimmender Klassifizierungen von Zugriffszeitdauern und Wiederholungszyklen mögliche Partitionen zu ermitteln und die ermittelten Partitionen darauf zu überprüfen, ob für die jeweilige Pfadreservierungsanfrage ausreichende Systemressourcen verfügbar sind. Darüber hinaus ist die Steuerungseinheit dafür ausgestaltet und eingerichtet, die jeweilige Pfadreservierungsanfrage bei einem positiven Überprüfungsergebnis zumindest einer ermittelten Partition zuzuordnen und innerhalb dieser Partition für die Pfadreservierungsanfrage erforderliche Systemressourcen zu reservieren.

Die vorliegende Erfindung wird nachfolgend an einem Ausführungsbeispiel anhand der Zeichnung näher erläutert. Es zeigt
- Figur 1: ein mehrere Kommunikationsgeräte und diesen zugeordnete Steuerungseinheiten umfassendes Kommunikationsnetz eines industriellen Automatisierungssystems,
- Figur 2: ein Ablaufdiagramm für eine Reservierung von Systemressourcen durch die Steuerungseinheiten des in Figur 1 dargestellten Kommunikationssystems,
- Figur 3: eine schematische Darstellung einer Einräumung eines Zugriffs auf Sendewarteschlangen der in Figur 1 dargestellten Kommunikationsgeräte an Datenströme mit unterschiedlichen Wiederholungszyklen.

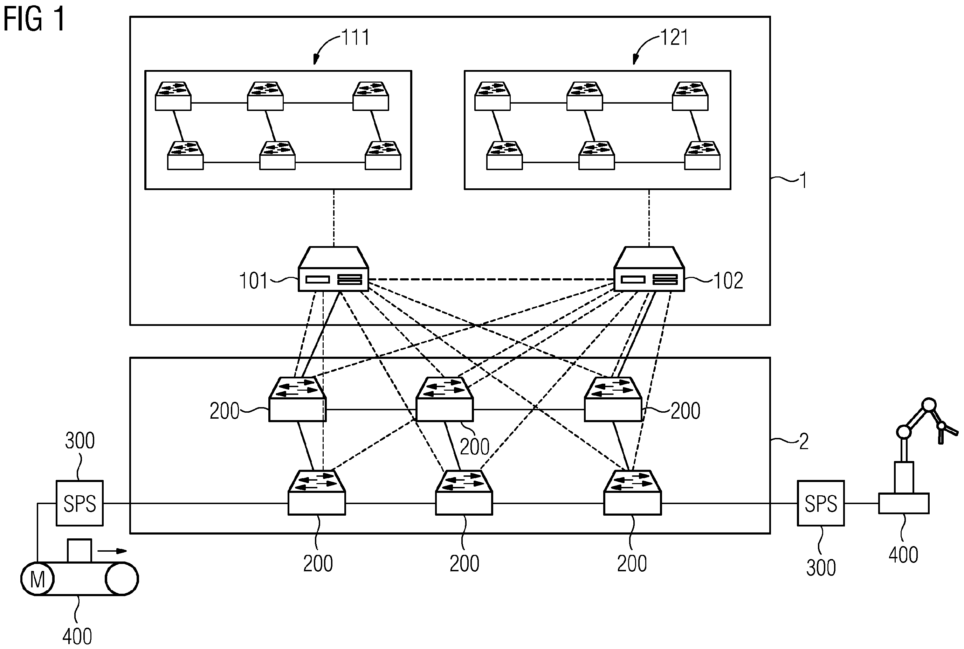

Das in Figur 1 dargestellte Kommunikationsnetz eines industriellen Automatisierungssystems umfasst mehrere Kommunikationsgeräte 200 und mehrere Steuerungseinheiten 101, 102. Die Kommunikationsgeräte 200 können beispielsweise Switche, Router oder Firewalls sein und zum Anschluss von speicherprogrammierbaren Steuerungen 300 oder Ein-/Ausgabeeinheiten des industriellen Automatisierungssystems dienen. Speicherprogrammierbare Steuerungen 300 umfassen typischerweise jeweils ein Kommunikationsmodul, eine Zentraleinheit sowie zumindest eine Eingabe/Ausgabe-Einheit (I/O-Modul) und stellen somit ebenfalls Kommunikationsgeräte dar. Eingabe/Ausgabe-Einheiten können grundsätzlich auch als dezentrale Peripheriemodule ausgestaltet sein, die entfernt von einer speicherprogrammierbaren Steuerung angeordnet sind.

Über das Kommunikationsmodul ist eine speicherprogrammierbare Steuerung 300 beispielsweise mit einem Switch oder Router oder zusätzlich mit einem Feldbus verbunden. Die Eingabe/Ausgabe-Einheit dient einem Austausch von Steuerungs- und Messgrößen zwischen der speicherprogrammierbaren Steuerung 300 und einer durch die speicherprogrammierbare Steuerung 300 gesteuerten Maschine oder Vorrichtung 400. Die Zentraleinheit ist insbesondere für eine Ermittlung geeigneter Steuerungsgrößen aus erfassten Messgrößen vorgesehen. Obige Komponenten der speicherprogrammierbaren Steuerung 300 sind im vorliegenden Ausführungsbeispiel über ein Rückwandbus-System miteinander verbunden.

Die Kommunikationsgeräte 200 sind im vorliegenden Ausführungsbeispiel einem Software Defined Network (SDN) zugeordnet, das eine als Control Plane bezeichnete Kommunikationssteuerungsebene 1 und eine als Data Plane bezeichnete Datenübermittlungsebene 2 umfasst. Die Steuerungseinheiten 101, 102 als SDN-Controller sind der Control Plane zugeordnet, während die Kommunikationsgeräte der Data Plane zugeordnet sind. Durch die Steuerungseinheiten 101, 102 werden beispielsweise Flow-Tabellen für Switche oder Router vorgegeben, aus denen Routing-Tabellen bzw. Forwarding-Tabellen für der jeweiligen Steuerungseinheit 101, 102 zugeordnete Kommunikationsgeräte 200 abgeleitet werden.

Die Steuerungseinheiten 101, 102 sind im vorliegenden Ausführungsbeispiel jeweils zumindest einem Tenant zugeordnet, insbesondere einem Benutzer bzw. einer Anwendung. Die Steuerungseinheiten 101, 102 sind allgemein dafür ausgestaltet und eingerichtet, Funktionen mehrerer zugeordneter Kommunikationsgeräte 200 zu steuern und jeweils einer Partition des Kommunikationsnetzes zugeordnet. Die Partitionen sind im vorliegenden Ausführungsbeispiel Network Slices und können mittels eines Engineering-Systems manuell durch einen Systemadministrator oder automatisiert festgelegt werden. Insbesondere umfassen die Network Slices jeweils vorgebbare Anteile an Systemressourcen zugeordneter Kommunikationsgeräte 200 für vorgebbare Ressourcennutzungsdauern, wobei die Network Slices vorzugsweise zueinander logisch disjunkt sind. Für jede Steuerungseinheit 101, 102 ist vorzugsweise jeweils eine separate Ressourcensicht 111, 121 auf die Anteile an Systemressourcen vorgesehen, die der jeweiligen Network Slice zugeordnet sind.

Zu Systemressourcen zählen beispielsweise Port-Bandbreite, Queue-Buffer, DHCP-Adressbereiche, VLAN-Identifikatoren und Routing-Tabellen- bzw. Forwarding-Tabellen-Einträge. Die Systemressourcen können den Steuerungseinheiten 101, 102 bei einer Inbetriebnahme des Kommunikationsnetzes grundsätzlich zunächst gleichverteilt partitioniert zugeordnet werden. Die Network Slices können dann durch die Steuerungseinheiten 101, 102 entsprechend einer jeweiligen Ressourcenausnutzung bzw. -anforderung verändert werden. Vorzugsweise werden die Systemressourcen bei einer Inbetriebnahme des Kommunikationsnetzes entsprechend bekannter bzw. geschätzter Klassifikationen von Kommunikationsanforderungen seitens mit dem Kommunikationsnetz zu verbindender Automatisierungsgeräte partitioniert.

Die Kommunikationsgeräte 200 umfassen jeweils zumindest eine Sende- und Empfangseinheit bzw. einen Port, wobei jeder Sende- und Empfangseinheit bzw. jedem Port jeweils mehrere Sendewarteschlangen (Queues) zugeordnet sind. Den Sendewarteschlangen wird jeweils für eine definierbare Zugriffszeitdauer innerhalb eines definierbaren Wiederholungszyklus Zugriff auf die jeweilige Sende- und Empfangseinheit bzw. auf den jeweiligen Port eingeräumt. Die Zugriffszeitdauern und Wiederholungszyklen für die Sendewarteschlangen werden durch die Steuerungseinheiten 101, 102 entsprechend den Ressourcennutzungsdauern für die Network Slices in den zugeordneten Kommunikationsgeräten 200 eingestellt. Dabei können die Zugriffszeitdauern und Wiederholungszyklen für die Sendewarteschlangen der Kommunikationsgeräte 200 beispielsweise mittels Time Aware Shaper entsprechend IEE 802.1Qbv gesteuert werden.

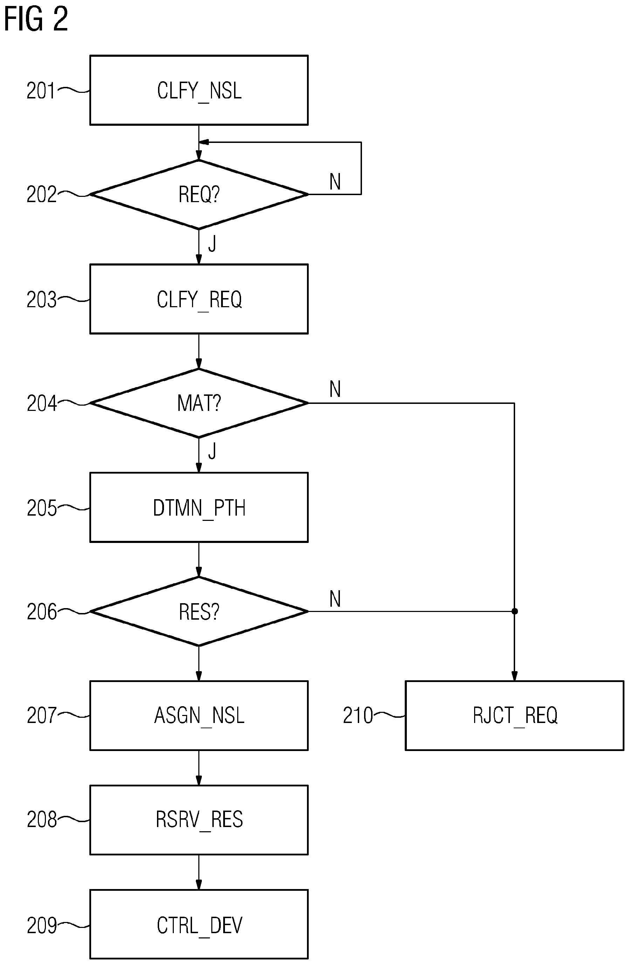

In Schritt 201 des in Figur 2 dargestellten Ablaufdiagramms für eine Reservierung von Systemressourcen werden die Network Slices entsprechend den in den zugeordneten Kommunikationsgeräten eingestellten Zugriffszeitdauern und Wiederholungszyklen klassifiziert. Dies kann beispielsweise mittels eines Engineering-Systems im Rahmen einer Projektierung erfolgen. Darüber hinaus überwachen die Steuerungseinheiten 101, 102 entsprechend Schritt 202 fortlaufend, ob Pfadreservierungsanfragen von Tenants, Benutzern bzw. Anwendungen vorliegen. Vorliegende Pfadreservierungsanfragen für Datenströme werden entsprechend in der jeweiligen Pfadreservierungsanfrage spezifizierten Zugriffszeitdauern und Wiederholungszyklen klassifiziert (Schritt 203). Entsprechend Schritt 204 werden durch die Steuerungseinheiten 101, 102 für die Pfadreservierungsanfragen anhand übereinstimmender Klassifizierungen von Zugriffszeitdauern und Wiederholungszyklen mögliche Network Slices ermittelt, innerhalb derer grundsätzlich eine Pfadreservierung möglich ist. Liegen keine übereinstimmenden Klassifizierungen vor, wird die jeweilige Pfadreservierungsanfrage entsprechend Schritt 210 abgewiesen. Abgewiesenen Pfadreservierungsanfragen zugeordnete Datenströme können grundsätzlich als Best Effort Daten in freien Zeitschlitzen übermittelt werden, ohne dass Qualitätsgarantien eingehalten werden. Darüber hinaus ist es auch möglich, bestimmte Zeitschlitze für Best Effort Daten zu reservieren.

Bei übereinstimmenden Klassifizierungen ermitteln die Steuerungseinheiten 101, 102 entsprechend Schritt 205 für die Pfadreservierungsanfragen jeweils Kommunikationsnetzpfade unter Berücksichtigung in der jeweiligen Network Slice verfügbarer Systemressourcen. Dabei ermitteln die Steuerungseinheiten 101, 102 die Kommunikationsnetzpfade beispielsweise anhand von Pfadkosten Darüber hinaus sind die Steuerungseinheiten 101, 102 dafür ausgestaltet und eingerichtet, die ermittelten Network Slices entsprechend Schritt 206 darauf zu überprüfen, ob für die jeweilige Pfadreservierungsanfrage ausreichende Systemressourcen verfügbar sind. Sind keine ausreichenden Systemressourcen verfügbar, erfolgt entsprechend Schritt 210 eine Abweisung der jeweiligen Pfadreservierungsanfrage. Eine Mitteilung der Abweisung kann beispielsweise Vorschläge für eine neue Reservierungsanfrage mit veränderten Parametern umfassen.

Wenn ausreichende Systemressourcen verfügbar sind, wird die jeweilige Pfadreservierungsanfrage entsprechend Schritt 207 einer ermittelten Network Slice zugeordnet, und innerhalb dieser Network Slice werden für die Pfadreservierungsanfrage erforderliche Systemressourcen reserviert (Schritt 208). Auf Basis dessen steuern die Steuerungseinheiten 101, 102 entsprechend Schritt 209 Routing- oder Switching-Funktionen der Kommunikationsgeräte entsprechend den ermittelten Kommunikationsnetzpfaden.

Innerhalb eines technischen Prozesses haben Datenströme häufig denselben Wiederholungszyklus. Bei überlagerten bzw. hierarchischen Regelungskreisen können jedoch unterschiedliche Wiederholungszyklen auftreten, die sich erheblich voneinander unterscheiden. Unterschiedliche Wiederholungszyklen erschweren jedoch eine Konfiguration eines zeitbasierten Schedulers für Time Aware Shaper. Im Rahmen der Konfiguration des Schedulers werden sämtliche Zeitpunkte festgelegt, zu denen ein Gate für eine Sendewarteschlange geöffnet oder geschlossen wird. Bei einem offenen Gate können Daten aus der dem jeweiligen Gate zugeordneten Sendewarteschlange gesendet werden. Daten aus einer Sendewarteschlange mit geschlossenem Gate können dagegen nicht gesendet werden.

Die Sendewarteschlangen der Kommunikationsgeräte 200 werden durch die Steuerungseinheiten 101, 102 für Datenströme mit unterschiedlichen Wiederholungszyklen eingestellt, indem für die unterschiedlichen Wiederholungszyklen ein kleinstes gemeinsames Vielfaches als Gesamt-Wiederholungszyklus ermittelt wird. Dabei sind die unterschiedlichen Wiederholungszyklen für die Sendewarteschlangen mit einer Häufigkeit in den Gesamt-Wiederholungszyklus eingebettet sind, die einem Quotienten aus Gesamt-Wiederholungszyklus und jeweiligem Wiederholungszyklus entspricht.

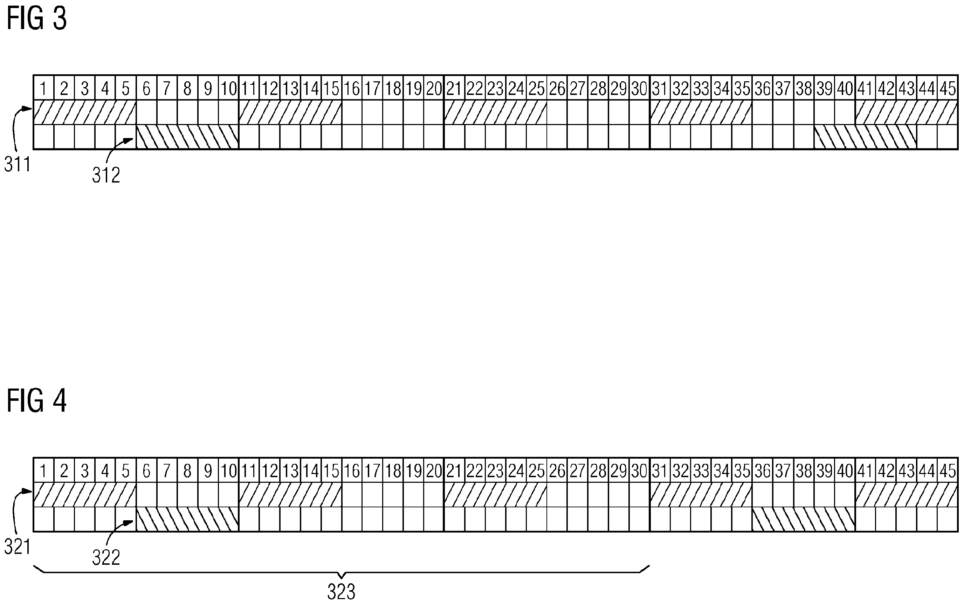

In Figur 3 sind zwei Szenarien mit jeweils 2 Datenströmen 311-312, 321-322 und unterschiedlichen Wiederholungszyklen dargestellt, wobei die Zugriffszeitdauern jeweils 5 ms betragen. Entsprechend einem ersten Szenario weist ein erster Datenstrom 311 einen Wiederholungszyklus von 10 ms auf, während ein zweiter Datenstrom 312 einen Wiederholungszyklus von 33 ms aufweist. Bei einem großen Gesamt-Wiederholungszyklus von 330 ms besteht neben einer daraus resultierenden grundsätzlich schlechten Bandbreitenausnutzung ein Problem darin, dass Gate-Reservierungen für den ersten Datenstrom 311 und den zweiten Datenstrom 312 von Zeitschlitz 41 bis Zeitschlitz 43 (Zeitschlitzlänge jeweils 1 ms) im ersten Szenario kollidieren würden.

Aufgrund dessen sind die unterschiedlichen Wiederholungszyklen bei einem zweiten Szenario derart angepasst, dass sie jeweils ein ganzzahliges Vielfaches eines Grundzyklus sind. Während ein erster Datenstrom 321 auch beim zweiten Szenario einen Wiederholungszyklus von 10 ms aufweist, wird für einen zweiten Datenstrom 322 ein Wiederholungszyklus von 30 ms gewählt. Im zweiten Szenario können damit können der Gesamt-Wiederholungszyklus 323 auf 30 ms verkürzt und kollidierende Gate-Reservierungen werden. Bei unterschiedlichen Wiederholungszyklen sollte daher stets eine Anpassung entsprechend dem zweiten Szenario vorgenommen werden.

## Patentansprüche

1. Verfahren zum Betrieb eines mehrere Kommunikationsgeräte umfassenden Kommunikationsnetzes eines industriellen Automatisierungssystems, bei dem
- zumindest eine Steuerungseinheit (101, 102) Funktionen mehrerer zugeordneter Kommunikationsgeräte (200) steuert und zumindest einer Partition des Kommunikationsnetzes zugeordnet ist, wobei Partitionen jeweils vorgebbare Anteile an Systemressourcen zugeordneter Kommunikationsgeräte (200) für vorgebbare Ressourcennutzungsdauern umfassen,
- die Kommunikationsgeräte (200) jeweils zumindest eine Sende- und Empfangseinheit umfassen und jeder Sende- und Empfangseinheit jeweils mehrere Sendewarteschlangen zugeordnet sind, denen jeweils für eine definierbare Zugriffszeitdauer innerhalb eines definierbaren Wiederholungszyklus Zugriff auf die jeweilige Sende- und Empfangseinheit eingeräumt wird, wobei die Zugriffszeitdauern und Wiederholungszyklen für die Sendewarteschlangen der Kommunikationsgeräte (200) mittels Time Aware Shaper entsprechend IEE 802.1Qbv gesteuert werden;
wobei durch die Steuerungseinheit (101,102)
- die Zugriffszeitdauern und Wiederholungszyklen für die Sendewarteschlangen durch die Steuerungseinheit (101, 102) entsprechend den Ressourcennutzungsdauern für die Partitionen in den zugeordneten Kommunikationsgeräten (200) eingestellt werden,
- die Partitionen entsprechend den in den zugeordneten Kommunikationsgeräten (200) eingestellten Zugriffszeitdauern und Wiederholungszyklen klassifiziert werden,
- Pfadreservierungsanfragen für Datenströme entsprechend spezifizierten Zugriffszeitdauern und Wiederholungszyklen klassifiziert werden, wobei die Pfadreservierungsanfragen durch jeweils einen Tenant, einen Benutzer und/oder eine Anwendung initiiert sind,
- für die Pfadreservierungsanfragen anhand übereinstimmender Klassifizierungen von Zugriffszeitdauern und Wiederholungszyklen mögliche Partitionen ermittelt werden,
- die ermittelten Partitionen darauf überprüft werden, ob für die jeweilige Pfadreservierungsanfrage ausreichende Systemressourcen verfügbar sind,
- die jeweilige Pfadreservierungsanfrage bei einem positiven Überprüfungsergebnis zumindest einer ermittelten Partition zugeordnet wird und innerhalb dieser Partition für die Pfadreservierungsanfrage erforderliche System-ressourcen reserviert werden.

2. Verfahren nach Anspruch 1,
bei dem die Steuerungseinheit (101, 102) für die Pfadreservierungsanfragen jeweils Kommunikationsnetzpfade unter Berücksichtigung in der jeweiligen Partition verfügbarer Systemressourcen ermittelt und Routing- oder Switching-Funktionen der Kommunikationsgeräte entsprechend den ermittelten Kommunikationsnetzpfaden steuert.

3. Verfahren nach Anspruch 2,
bei dem die Steuerungseinheit (101, 102) die Kommunikationsnetzpfade anhand eines Gütemaßes ermittelt.

4. Verfahren nach Anspruch 3,
bei dem als Gütemaß zur Ermittlung der Kommunikationsnetzpfade durch die Steuerungseinheit (101, 102) Pfadkosten angesetzt werden.

5. Verfahren nach einem der Ansprüche 1 bis 4,
bei dem die Sendewarteschlangen der Kommunikationsgeräte (200) durch die Steuerungseinheit (101, 102) für Datenströme mit unterschiedlichen Wiederholungszyklen eingestellt werden, indem für die unterschiedlichen Wiederholungszyklen ein kleinstes gemeinsames Vielfaches als Gesamt-Wiederholungszyklus ermittelt wird, bei dem die unterschiedlichen Wiederholungszyklen für die Sendewarteschlangen mit einer Häufigkeit in den Gesamt-Wiederholungszyklus eingebettet sind, die einem Quotienten aus Gesamt-Wiederholungszyklus und jeweiligem Wiederholungszyklus entspricht und bei dem die Zugriffszeitdauern für die Sendewarteschlangen jeweils identisch und die unterschiedlichen Wiederholungszyklen jeweils ein ganzzahliges Vielfaches eines Grundzyklus sind.

6. Verfahren nach einem der Ansprüche 1 bis 5,
bei dem die Kommunikationsgeräte einem Software Defined Network zugeordnet sind, das eine als Control Plane bezeichnete Kommunikationssteuerungsebene (1) und eine als Data Plane bezeichnete Datenübermittlungsebene (2) umfasst, bei dem die Steuerungseinheit (101, 102) der Control Plane zugeordnet ist und bei dem die Kommunikationsgeräte (200) der Data Plane zugeordnet sind.

7. Verfahren nach Anspruch 6,
bei dem die Partitionen Network Slices sind und mittels eines Engineering-Systems manuell durch einen Systemadministrator oder automatisiert festgelegt werden.

8. Verfahren nach einem der Ansprüche 6 oder 7,
bei dem die Systemressourcen mehreren Steuerungseinheiten (101, 102) bei einer Inbetriebnahme des Kommunikationsnetzes gleichverteilt partitioniert zugeordnet werden und bei dem die Partitionen entsprechend einer jeweiligen Ressourcenausnutzung und/oder -anforderung durch die Steuerungseinheiten verändert werden.

9. Verfahren nach einem der Ansprüche 6 oder 7,
bei dem die Systemressourcen bei einer Inbetriebnahme des Kommunikationsnetzes entsprechend bekannter und/oder geschätzter Klassifikationen von Kommunikationsanforderungen seitens mit dem Kommunikationsnetz zu verbindender Automatisierungsgeräte (300) partitioniert werden.

10. Verfahren nach einem der Ansprüche 6 bis 9,
bei dem die Kommunikationsgeräte (200) Router und/oder Switches umfassen und bei dem durch die Steuerungseinheit (101, 102) Flow-Tabellen vorgebbar sind, aus denen Routing-Tabellen und/oder Forwarding-Tabellen für der Steuerungseinheit (101, 102) zugeordnete Kommunikationsgeräte (200) abgeleitet werden.

11. Verfahren nach einem der Ansprüche 1 bis 10,
bei dem die Partitionen zueinander logisch disjunkt sind.

12. Steuerungseinheit (101,102) für ein mehrere Kommunikationsgeräte (200) umfassendes Kommunikationsnetzwerk eines industriellen Automatisierungssystems zur Durchführung eines Verfahrens nach einem der Ansprüche 1 bis 11, wobei die Steuereinheit dafür ausgestaltet und eingerichtet ist,
- Funktionen mehrerer zugeordneter Kommunikationsgeräte (200) zu steuern und zumindest einer Partition eines Kommunikationsnetzes zugeordnet zu sein, wobei Partitionen jeweils vorgebbare Anteile an Systemressourcen zugeordneter Kommunikationsgeräte für vorgebbare Ressourcennutzungsdauern umfassen,
- Zugriffszeitdauern und Wiederholungszyklen für Sendewarteschlangen entsprechend den Ressourcennutzungsdauern für die Partitionen in den zugeordneten Kommunikationsgeräten einzustellen, wobei die Kommunikationsgeräte (200) jeweils zumindest eine Sende- und Empfangseinheit umfassen und jeder Sende- und Empfangseinheit jeweils mehrere Sendewarteschlangen zugeordnet sind, denen jeweils für eine definierbare Zugriffszeitdauer innerhalb eines definierbaren Wiederholungszyklus Zugriff auf die jeweilige Sende- und Empfangseinheit eingeräumt wird, wobei die Zugriffszeitdauern und Wiederholungszyklen für die Sendewarteschlangen der Kommunikationsgeräte (200) mittels Time Aware Shaper entsprechend IEE 802.1Qbv gesteuert werden,
- die Partitionen entsprechend den in den zugeordneten Kommunikationsgeräten eingestellten Zugriffszeitdauern und Wiederholungszyklen zu klassifizieren,
- Pfadreservierungsanfragen für Datenströme entsprechend spezifizierten Zugriffszeitdauern und Wiederholungszyklen zu klassifizieren, wobei die Pfadreservierungsanfragen durch jeweils einen Tenant, einen Benutzer und/oder eine Anwendung initiiert sind,
- für die Pfadreservierungsanfragen anhand übereinstimmender Klassifizierungen von Zugriffszeitdauern und Wiederholungszyklen mögliche Partitionen zu ermitteln,
- die ermittelten Partitionen darauf zu überprüfen, ob für die jeweilige Pfadreservierungsanfrage ausreichende Systemressourcen verfügbar sind,
- die jeweilige Pfadreservierungsanfrage bei einem positiven Überprüfungsergebnis zumindest einer ermittelten Partition zuzuordnen und innerhalb dieser Partition für die Pfadreservierungsanfrage erforderliche Systemressourcen zu reservieren.

## Claims

1. Method for operating an industrial automation system communication network comprising a plurality of communication devices, in which method
- at least one control unit (101, 102) controls functions of a plurality of assigned communication devices (200), and is assigned to at least one partition of the communication network, wherein partitions each comprise specifiable portions of system resources of assigned communication devices (200) for specifiable resource utilization periods,
- the communication devices (200) each comprise at least one transceiver, and each transceiver is respectively assigned a plurality of transmit queues, each of which is granted access to the respective transceiver for a definable access time period within a definable repetition cycle, wherein the access time periods and repetition cycles for the transmit queues of the communication devices (200) are controlled by means of a time aware shaper according to IEE 802.1Qbv;
wherein, by means of the control unit (101, 102),
- the access time periods and repetition cycles for the transmit queues are set in the assigned communication devices (200) by the control unit (101, 102) according to the resource utilization periods for the partitions,
- the partitions are classified according to the access time periods and repetition cycles set in the assigned communication devices (200),
- path reservation requests for data streams are classified according to specified access time periods and repetition cycles, wherein the path reservation requests are initiated by a tenant, a user and/or an application in each case,
- potential partitions for the path reservation requests are determined on the basis of matching classifications of access time periods and repetition cycles,
- the determined partitions are checked to ascertain whether there are sufficient system resources available for the respective path reservation request,
- if the result of the check is positive, the respective path reservation request is assigned to at least one determined partition, and system resources required for the path reservation request are reserved within this partition.

2. Method according to Claim 1,
in which the control unit (101, 102) determines communication network paths for each of the path reservation requests, taking into account system resources available in the respective partition, and controls routing or switching functions of the communication devices according to the determined communication network paths.

3. Method according to Claim 2,
in which the control unit (101, 102) determines the communication network paths on the basis of a quality measure.

4. Method according to Claim 3,
in which path costs are applied as the quality measure for determining the communication network paths by the control unit (101, 102).

5. Method according to any of Claims 1 to 4,
in which the control unit (101, 102) sets the transmit queues of the communication devices (200) for data streams having different repetition cycles by determining, for the different repetition cycles, a smallest common multiple as the total repetition cycle, in which the different repetition cycles for the transmit queues are embedded in the total repetition cycle with a frequency equal to a quotient of the total repetition cycle and the respective repetition cycle, and in which the access time periods for the transmit queues are respectively identical, and the different repetition cycles are each an integer multiple of a fundamental cycle.

6. Method according to any of Claims 1 to 5,
in which the communication devices are assigned to a software defined network which comprises a communication control plane (1) referred to as the control plane and a data transmission plane (2) referred to as the data plane, in which the control unit (101, 102) is assigned to the control plane, and in which the communication devices (200) are assigned to the data plane.

7. Method according to Claim 6,
in which the partitions are network slices and are specified by means of an engineering system manually by a system administrator or in an automated manner.

8. Method according to either of Claims 6 and 7,
in which, during commissioning of the communication network, the system resources are assigned to a plurality of control units (101, 102) such that they are partitioned in an equally distributed manner, and in which the partitions are modified by the control units according to a respective resource utilization and/or resource requirement.

9. Method according to either of Claims 6 and 7,
in which, during commissioning of the communication network, the system resources are partitioned according to known and/or estimated classifications of communication requirements on the part of automation devices (300) to be connected to the communication network.

10. Method according to any of Claims 6 to 9,
in which the communication devices (200) comprise routers and/or switches, and in which the control unit (101, 102) can define flow tables, from which routing and/or forwarding tables for communication devices (200) assigned to the control unit (101, 102) are derived.

11. Method according to any of Claims 1 to 10,
in which the partitions are logically disjunct from one another.

12. Control unit (101, 102) for an industrial automation system communication network comprising a plurality of communication devices (200) for performing a method according to any of Claims 1 to 11, wherein the control unit is embodied and designed
- to control functions of a plurality of assigned communication devices (200), and to be assigned to at least one partition of a communication network, wherein partitions each comprise specifiable portions of system resources of assigned communication devices for specifiable resource utilization periods,
- to set, in the assigned communication devices, access time periods and repetition cycles for transmit queues according to the resource utilization periods for the partitions, wherein the communication devices (200) each comprise at least one transceiver, and each transceiver is respectively assigned a plurality of transmit queues, each of which is granted access to the respective transceiver for a definable access time period within a definable repetition cycle, wherein the access time periods and repetition cycles for the transmit queues of the communication devices (200) are controlled by means of a time aware shaper according to IEE 802.1Qbv,
- to classify the partitions according to the access time periods and repetition cycles set in the assigned communication devices,
- to classify path reservation requests for data streams according to specified access time periods and repetition cycles, wherein the path reservation requests are initiated by a tenant, a user and/or an application in each case,
- to determine potential partitions for the path reservation requests on the basis of matching classifications of access time periods and repetition cycles,
- to check the determined partitions to ascertain whether there are sufficient system resources available for the respective path reservation request,
- to assign the respective path reservation request, if the result of the check is positive, to at least one determined partition, and to reserve, within this partition, system resources required for the path reservation request.

## Revendications

1. Procédé pour faire fonctionner un réseau de communication, comprenant plusieurs appareils de communication d'un système d'automatisation industrielle, dans lequel
- au moins une unité (101, 102) de commande commande des fonctions de plusieurs appareils (200) de communication associés et est associée à au moins un cloisonnement du réseau de communication, des cloisonnements comprenant chacun, pendant des durées d'utilisation de ressources pouvant être données à l'avance, des appareils (200) de communication associés à des proportions pouvant être données à l'avance de ressources du système,
- les appareils (200) de communication comprennent chacun au moins une unité d'émission et une unité de réception et, à chaque unité d'émission et de réception, sont associés, respectivement, plusieurs files d'attente d'émission auxquelles est accordé, respectivement, pendant une durée de temps d'accès pouvant être définie, à l'intérieur d'un cycle de répétition pouvant être défini, accès à l'unité respective d'émission et de réception, les durées de temps d'accès et les cycles de répétition, pour les files d'attente d'émission des appareils (200) de communication, étant commandés au moyen de Time Aware Shaper correspondant à IEE 802.1Qbv ;
dans lequel, par l'unité (101, 102) de commande
- les durées de temps d'accès et les cycles de répétition pour les files d'attente d'émission sont réglés par l'unité (101, 102) de commande, conformément aux durées d'utilisation des ressources pour les cloisonnements dans les appareils (200) de communication associés,
- les cloisonnements sont classés conformément aux durées de temps d'accès et aux cycles de répétition réglés dans les appareils (200) de communication associés,
- des demandes de réservation de trajet pour des flux de données sont classées conformément à des durées de temps d'accès et à des cycles de répétition spécifiés, les demandes de réservation de trajet étant lancées par, respectivement, un tenant, un utilisateur et/ou une application,
- on détermine des cloisonnements possibles pour les demandes de réservation de trajet à l'aide de classifications en coïncidence de durées de temps d'accès et de cycles de répétition,
- on contrôle les cloisonnements déterminés sur le point de savoir si des ressources du système, suffisantes pour la demande de réservation de trajet respectif, sont disponibles,
- on associe la demande de réservation de trajet respective, si le résultat du contrôle est positif, au moins à un cloisonnement déterminé et, au sein de ce cloisonnement, on réserve des ressources du système nécessaires à la demande de réservation de trajet.

2. Procédé suivant la revendication 1,
dans lequel l'unité (101, 102) de commande détermine, pour les demandes de réservation de trajet, respectivement, des trajets du réseau de communication, en tenant compte des ressources du système disponibles dans le cloisonnement respectif et commande des fonctions de routage ou de commutation des appareils de communication, conformément aux trajets du réseau de communication qui ont été déterminés.

3. Procédé suivant la revendication 2,
dans lequel l'unité (101, 102) de commande détermine les trajets du réseau de communication à l'aide d'une mesure de qualité.

4. Procédé suivant la revendication 3,
dans lequel on applique des coûts de trajet comme mesure de qualité pour la détermination des trajets du réseau de communication par l'unité (101, 102) de commande.

5. Procédé suivant l'une des revendications 1 à 4,
dans lequel on règle les files d'attente d'émission des appareils (200) de communication par l'unité (101, 102) de commande pour des flux de données ayant des cycles de répétition différents, en déterminant, pour les cycles de répétition différents, un plus petit commun multiple comme cycle de répétition d'ensemble, dans lequel sont incorporés, dans le cycle de répétition d'ensemble, les cycles de répétition différents pour les files d'attente d'émission ayant une fréquence, qui correspond à un quotient du cycle de répétition d'ensemble sur le cycle de répétition respectif, et dans lequel les durées de temps d'accès pour les files d'attente d'émission sont, respectivement, les mêmes et les cycles de répétition différents sont, respectivement, un multiple en nombre entier d'un cycle de base.

6. Procédé suivant l'une des revendications 1 à 5,
dans lequel les appareils de communication sont associés à un logiciel Defined Network, qui comprend un plan (1) de commande de communication désigné par Control Plane et un plan (2) de transmission de données désigné par Data Plane, dans lequel l'unité (101, 102) de commande est associée au Control Plane et dans lequel les appareils (200) de communication sont associés au Data Plane.

7. Procédé suivant la revendication 6,
dans lequel les cloisonnements sont des Network Slices et sont fixés au moyen d'un système d'ingénierie manuellement par un administrateur de système ou de manière automatisée.

8. Procédé suivant l'une des revendications 6 ou 7,
dans lequel on associe en cloisonnement, en les répartissant uniformément, les ressources du système, à plusieurs unités (101, 102) de commande, lors d'une mise en service du réseau de communication, et dans lequel les cloisonnements sont modifiés par les unités de commande en fonction d'une utilisation et/ou d'une demande de ressource respective.

9. Procédé suivant l'une des revendications 6 ou 7,
dans lequel on cloisonne les ressources du système lors de la mise en service du réseau de communication en fonction de classifications connues et/ou estimées de demandes de communication de la part d'appareil (300) d'automatisation à relier au réseau de communication.

10. Procédé suivant l'une des revendications 6 à 9,
dans lequel les appareils (200) de communication comprennent des routeurs et/ou des commutateurs et dans lequel il peut être prescrit, par les unités (101, 102) de commande, des tables de flux à partir desquelles on déduit des tables de routage et/ou des tables d'acheminement pour des appareils (200) de communication associés à l'unité (101, 102) de commande.

11. Procédé suivant l'une des revendications 1 à 10,
dans lequel les cloisonnements sont disjoints logiquement les uns par rapport aux autres.

12. Unité (101, 102) de commande d'un réseau de communication comprenant plusieurs appareils (200) de communication d'un système d'automatisation industrielle pour effectuer un procédé suivant l'une des revendications 1 à 11, l'unité de commande étant conformée et conçue pour
- commander des fonctions de plusieurs appareils (200) de communication associés et pour être associée à au moins un cloisonnement d'un réseau de communication, des cloisonnements comprenant chacun des appareils de communication associés à des proportions pouvant être données à l'avance de ressources du système pour des durées d'utilisation de ressources pouvant être données à l'avance,
- régler des durées de temps d'accès et des cycles de répétitions pour des files d'attente d'émission, conformément aux durées d'utilisation des ressources pour les cloisonnements dans les appareils de communication associés, les appareils (200) de communication comprenant chacun au moins une unité d'émission et une unité de réception, et à chaque unité d'émission et de réception étant associées, respectivement, plusieurs files d'attente d'émission auxquelles est accordé, respectivement, pendant une durée de temps d'accès pouvant être définie, à l'intérieur d'un cycle de répétition pouvant être défini, accès à l'unité respective d'émission et de réception, les durées de temps d'accès et les cycles de répétition pour les files d'attente d'émission des appareils (200) de communication étant commandés au moyen de Time Aware Shaper correspondant à IEE 802.1Qbv,
- pour classer les cloisonnements en fonction des durées de temps d'accès et des cycles de répétition réglés dans les appareils de communication associés,
- pour classer des demande de réservation de trajet pour des flux de données en fonction de durées de temps d'accès et de cycles de répétition spécifiés, les demandes de réservation de trajet étant lancées par, respectivement, un tenant, un utilisateur et/ou une application,
- pour déterminer des cloisonnements possibles pour les demandes de réservation de trajet à l'aide de classifications en coïncidence de durées de temps d'accès et de cycles de répétition,
- pour contrôler les cloisonnements déterminés sur le point de savoir si des ressources du système suffisantes, pour la demande de réservation de trajet respective, sont disponibles,
- pour associer la demande de réservation de trajet respective, si le résultat du contrôle est positif, à au moins un cloisonnement déterminé et pour réserver, au sein de ce cloisonnement, des ressources du système nécessaires à la demande de réservation de trajet.
